Europäisches Patentamt

European Patent Office

Office européen des brevets

(11) Publication number: **0 405 984 B1**

# EUROPEAN PATENT SPECIFICATION

(45) Date of publication of patent specification: **23.08.95**   (51) Int. Cl.⁶: **B60T 8/00**, B60K 28/16

(21) Application number: **90307101.7**

(22) Date of filing: **28.06.90**

(54) **Traction control method for vehicle.**

(30) Priority: **28.06.89 JP 166414/89**
**07.02.90 JP 27696/90**

(43) Date of publication of application:
**02.01.91 Bulletin 91/01**

(45) Publication of the grant of the patent:
**23.08.95 Bulletin 95/34**

(84) Designated Contracting States:
**DE GB**

(56) References cited:
**EP-A- 0 166 178**
**EP-A- 0 265 969**
**FR-A- 2 509 242**

(73) Proprietor: **HONDA GIKEN KOGYO KABUSHIKI KAISHA**
**1-go, 1-ban, Minami-Aoyama 2-chome**
**Minato-ku**
**Tokyo 107 (JP)**

(72) Inventor: **Matsuda, Sohei, c/o Kabushiki Kaish**
**Honda Gijutsu Kenkyusho,**
**1-go, 4-ban chuo 1-chome**
**Wako-shi,**
**Saitama-ken (JP)**
Inventor: **Suzuki, Jiro, c/o Kabushiki Kaish**
**Honda Gijutsu Kenkyusho,**
**1-go, 4-ban chuo 1-chome**
**Wako-shi,**
**Saitama-ken (JP)**

(74) Representative: **Tomlinson, Kerry John et al**
**Frank B. Dehn & Co.**
**European Patent Attorneys**
**Imperial House**
**15-19 Kingsway**
**London WC2B 6UZ (GB)**

## Description

The field of the present invention is traction control methods for vehicles, comprising producing a braking force in drive-wheel brake devices, when an excessively slipping tendency has occurred in a drive wheel which is in driving operation.

Such traction control methods have been already known, for example, from U.S. Patent No.389,353.

The prior art methods disclosed include two types: one which independently controls the hydraulic braking pressures for left and right drive-wheel brake devices, and the other which collectively controls the hydraulic braking pressure for the left and right drive-wheel brake devices, both being effected when an excessively slipping tendency has occurred in a drive wheel which is in driving operation.

When an excessively slipping tendency has occurred in the drive wheels of a vehicle which is travelling on a sloping road or on a road surface with the drive wheels in contact with road surface portions of different friction coefficients, the hydraulic braking pressure for the drive-wheel brake devices should be independently controlled in order to rapidly recover the driving force, whereas when an excessively slipping tendency has occurred in the drive wheels in the course of travelling of the vehicle at a relatively high speed, the hydraulic braking pressure for the drive-wheel brake devices should be collectively controlled to maintain the stability of the vehicle. However, if the hydraulic braking pressure is controlled in a fixed control mode as in the prior art, no satisfactory result can be achieved in respect of one of the driving force and the stability.

EP-A-166178 discloses a system in which a wheel is braked depending on its slipping tendency, and in which additionally engine torque is modified based on the slipping tendency of both the driving wheels or on a predetermined wheel speed. FR-A-2509242 discloses a system which reduces output torque when vehicle speed is above a set value and a wheel is braked and/or a driven wheel is spinning.

The present invention has been accomplished with the above circumstances in view, and it is an object of the present invention to provide a traction control method for a vehicle, wherein control modes for the drive-wheel brake devices can be changed between the time when the driving force should be taken more account of and the time when the vehicle stability should be taken more account of, thereby improving the driving force and the stability while maintaining the harmony therebetween.

To achieve the above object, according to the present invention, a traction control method for a vehicle is provided according to claim 1, in which an independent control mode for independently controlling the braking forces of a plurality of drive-wheel brake devices and a collective control mode for collectively controlling the braking forces of the drive-wheel brake devices are changeable from one to the other.

This enables a traction control which can be satisfactory both in respect of ensuring the driving force and in respect of taking more account of the stability.

In the independent control mode, an interference may occur between the drive wheels which are under the traction control and an engine mounted on the vehicle. If target values of drive-wheel velocities are previously set at given levels, a restraint which may reduce the number of revolutions of engine may be applied to the engine side from the drive wheel side. For example, if the traction control in the independent control mode is effected when the excessively slipping tendency of one of the left and right drive wheels has been increased, there is an increased difference between the actual number of revolutions of the engine and the ideal number of revolutions of the engine which may be evaluated from approximately 1/2 of the sum of the velocities of the left and right drive wheels, resulting in an increased restraint applied to the engine side from the drive wheel side, with a fear that the number of revolutions of the engine may be reduced more than necessary, and/or a control hunting may occur.

To solve this, the target values of the drive-wheel velocities in the independent control mode are set larger than those in the collective control mode.

In doing so, it is possible to inhibit the restraint applied to the engine side from the drive wheel side during the traction control in the independent control mode, thereby avoiding any reduction in number of revolutions of the engine more than necessary and any reduction in drivability.

The above and other objects, features and advantages of the invention will become apparent from a reading of the following description of a preferred embodiment, given by way of example in conjunction with the accompanying drawings.

BRIEF DESCRIPTION OF THE DRAWINGS

Fig.1 is a hydraulic circuit diagram schematically illustrating a hydraulic braking pressure system to which is applied a method according to the invention;

Fig.2 is a block diagram illustrating the construction of essential portions of a control means 12 of Fig. 1;

Fig.3 is a graph illustrating target values in a collective control mode and in an independent control mode, respectively; and

Fig.4 is a graph illustrating variations in target values of drive-wheel velocities at change-over between the collective control mode and the independent control mode.

## DESCRIPTION OF THE PREFERRED EMBODIMENT

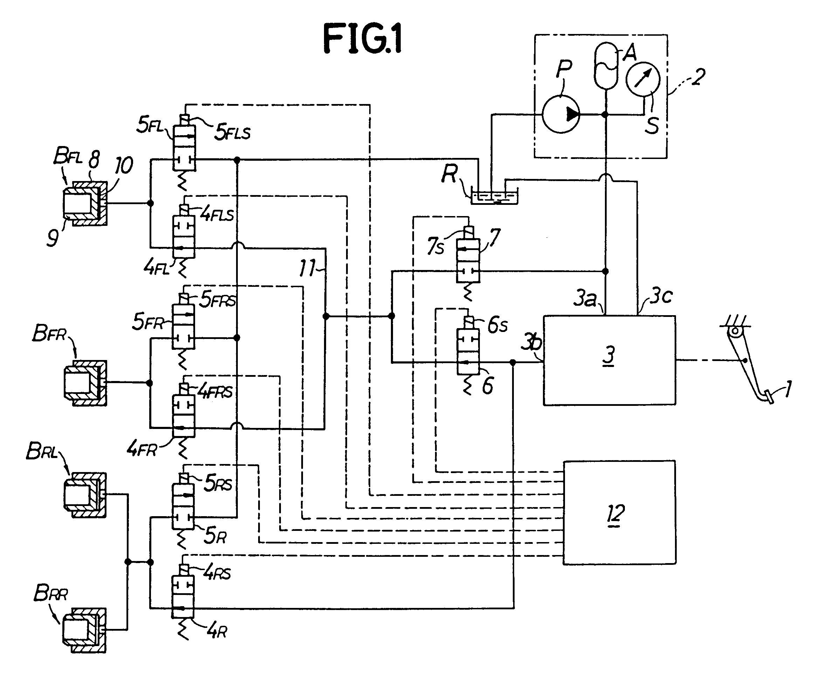

There will now be described one embodiment which is applied to a front engine and front drive vehicle. Referring first to Fig.1, left and right drive-wheel brake devices $B_{FL}$ and $B_{FR}$ are mounted on left and right front wheels of the vehicle, respectively, and left and right driven-wheel brake devices $B_{RL}$ and $B_{RR}$ are mounted on left and right rear wheels, respectively. A hydraulic braking pressure producing means 3 is connected to a brake pedal 1 for controlling the hydraulic pressure from a hydraulic pressure supply source 2 to output in accordance with the amount of brake pedal 1 depressed, so that during a normal braking, the output hydraulic pressure from the hydraulic braking pressure producing means 3 is provided to each of the wheel brake devices $B_{FL}$, $B_{FR}$, $B_{RL}$ and $B_{RR}$. The hydraulic braking pressure for the brake devices $B_{FL}$, $B_{FR}$, $B_{RL}$ and $B_{RR}$ can be maintained or reduced to effect an anti-lock control by means of flow-in solenoid valves $4_{FL}$ and $4_{FR}$ and flow-out solenoid valves $5_{FL}$ and $5_{FR}$ mounted individually in correspondence to the drive-wheel brake devices $B_{FL}$ and $B_{FR}$ as well as flow-in and flow-out solenoid valves $4_R$ and $5_R$ mounted commonly for the driven-wheel brake devices $B_{RL}$ and $B_{RR}$. In addition, the hydraulic braking pressure can be controlled to effect a traction control by means of normally-opened and normally-closed type traction-control solenoid valves 6 and 7 as well as the flow-in solenoid valves $4_{FL}$, $4_{FR}$ and flow-out solenoid valves $5_{FL}$, $5_{FR}$.

The hydraulic pressure supply source 2 comprises a hydraulic pump P for pumping a working oil from a reservoir R, an accumulator A connected to the hydraulic pump P, and a pressure switch S for controlling the operation of the hydraulic pump P.

The hydraulic braking pressure producing means 3 includes an input port 3a leading to the hydraulic pressure supply source 2, an output port 3b, and a release port 3c leading to the reservoir R and is designed to produce a hydraulic pressure in accordance with the amount of brake pedal 1 depressed from the output port 3b by providing a change-over of the communication between the output port 3b and the input port 3a and the communication between the output port 3b and the release port 3c in response to the depression of the brake pedal 1.

Each of the brake devices $B_{FL}$, $B_{FR}$, $B_{RL}$ and $B_{RR}$ comprises a cylinder body 8 and a braking piston 9 slidably received in the cylinder body 8, so that a braking force is exhibited by the movement of the braking piston 9 in accordance with the hydraulic pressure applied to a braking hydraulic pressure chamber 10 defined between the cylinder body 8 and the braking piston 9.

The flow-in solenoid valves $4_{FL}$ and $4_{FR}$ are arranged parallel to the flow-out solenoid valves $5_{FL}$ and $5_{FR}$, respectively, and connected to the respective hydraulic braking pressure chambers 10 in the drive-wheel brake devices $B_{FL}$ and $B_{FR}$, and the flow-in solenoid valve $4_R$ and the flow-out solenoid valve $5_R$ are arranged in parallel and connected to the hydraulic braking pressure chambers 10 in the driven-wheel brake devices $B_{RL}$ and $B_{RR}$. The flow-in solenoid valves $4_{FL}$, $4_{FR}$ and $4_R$ are solenoid valves which are adapted to be closed during excitation of solenoids $4_{FLS}$, $4_{FRS}$ and $4_{RS}$, and the flow-out solenoid valves $5_{FL}$, $5_{FR}$ and $5_R$ are solenoid valves which are adapted to be opened during excitation of solenoids $5_{FLS}$, $5_{FRS}$ and $5_{RS}$. Moreover, the flow-in solenoid valves $4_{FL}$ and $4_{FR}$ are interposed between the hydraulic braking pressure chambers 10 in the drive-wheel brake devices $B_{FL}$ and $B_{FR}$ and an oil passage 11, while the flow-out solenoid valves $5_{FL}$ and $5_{FR}$ are interposed between the hydraulic braking pressure chambers 10 in the drive-wheel brake devices $B_{FL}$ and $B_{FR}$ and the reservoir R. The flow-in solenoid valve $4_R$ is interposed between the hydraulic braking pressure chambers 10 in the driven-wheel brake devices $B_{RL}$ and $B_{RR}$ and the output port 3b in the hydraulic braking pressure producing means 3, while the flow-out solenoid valve $4_R$ is interposed between the hydraulic braking pressure chambers 10 in the driven-wheel brake devices $B_{RL}$ and $B_{RR}$ and the reservoir R.

The normally-opened type traction control solenoid valve 6 is interposed between the oil passage 11 and the output port 3b in the hydraulic braking pressure producing means 3, while the normally-closed type traction control solenoid valve 7 is interposed between the oil passage 11 and the hydraulic pressure supply source 2.

The excitation and deexcitation of the respective solenoids $4_{FLS}$, $4_{FRS}$, $4_{RS}$, $5_{FLS}$, $5_{FRS}$, $5_{RS}$, $6_S$ and $7_S$ in the solenoid valves $4_{FL}$, $4_{FR}$, $4_R$, $5_{FL}$, $5_{FR}$, $5_R$, 6 and 7 are controlled by a control means 12, and in a normal condition, the solenoids $4_{FLS}$, $4_{FRS}$, $4_{RS}$, $5_{FLS}$, $5_{FRS}$, $5_{RS}$, $6_S$ and $7_S$ are in their deexcited states. In an anti-lock brake control during braking, the flow-in solenoid valves $4_{FL}$, $4_{FR}$ and $4_R$ associated with the wheels which are about to become locked are closed, whereby increasing of the braking force can be suppressed to avoid that the wheels are brought into the locked states. If the wheels are still likely to be locked, the corresponding flow-out solenoid valves $5_{FL}$, $5_{FR}$ and $5_R$ are opened to reduce the braking force, whereby the locking tendency of the wheels is eliminated.

When the drive wheels are about to be excessively slipped, the hydraulic pressure from the hydraulic pressure supply source 2 is applied to the oil passage 11 by excitation of the solenoids $6_S$ and $7_S$ of the normally-opened and normally-closed type traction-control solenoid valves 6 and 7. To increase the braking force, the hydraulic pressure in the oil passage 11, with the solenoids $4_{FLS}$, $4_{FRS}$, $5_{FLS}$ and $5_{FRS}$ remaining deexcited, is applied to the hydraulic braking pressure chambers 10 in the drive-wheel brake devices $B_{FL}$ and $B_{FR}$. To maintain the braking force, the solenoids $4F_{LS}$ and $4_{FRS}$ are excited with the solenoids $5_{FLS}$ and $5_{FRS}$ remaining deexcited, thereby maintaining the hydraulic braking pressure in the hydraulic braking pressure chambers 10. Further, to reduce the braking force, the solenoids $4_{FLS}$, $4_{FRS}$, $5_{FLS}$ and $5_{FRS}$ are excited to release the hydraulic pressure in the hydraulic braking pressure chambers 10. In such a traction control, the control means 12 is operated with a change-over between an independent control mode and a collective control mode. The construction of essential portions of the control means 12 therefor will be described below.

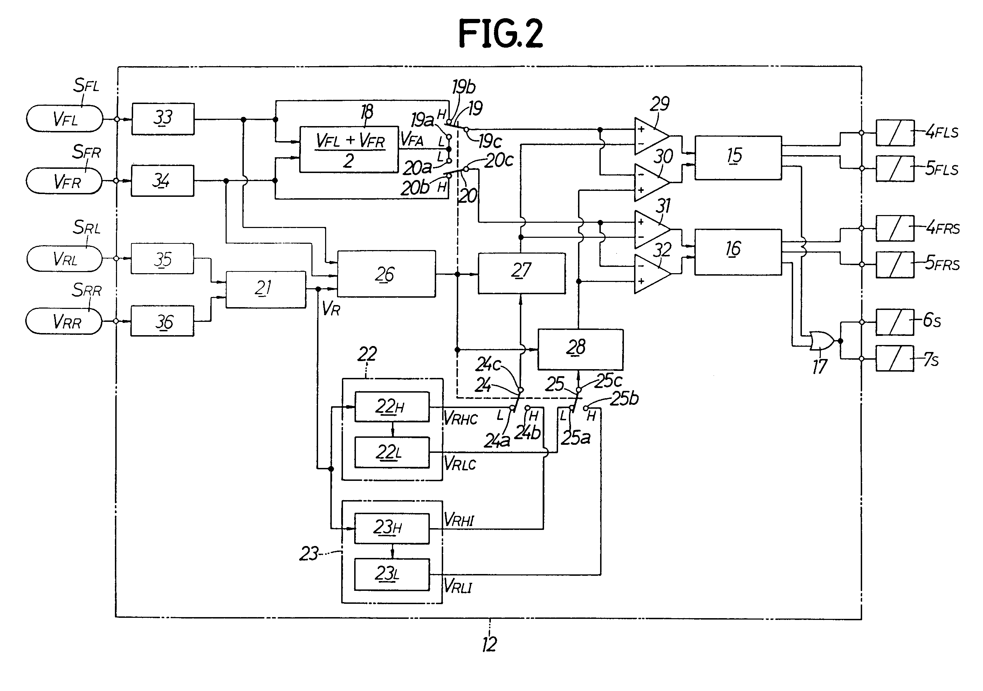

Referring to Fig.2, the control means 12 comprises a left drive-wheel solenoid control circuit 15 connected to the solenoids $4_{FLS}$ and $5_{FLS}$ of the flow-in and flow-out solenoid valves $4_{FL}$ and $5_{FL}$ associated with the left drive-wheel brake device $B_{FL}$, a right drive-wheel solenoid control circuit 16 connected to the solenoids $4_{FRS}$ and $5_{FRS}$ of the flow-in and flow-out solenoid valves $4_{FR}$ and $5_{FR}$ associated with the right drive-wheel brake device $B_{FR}$, an OR circuit 17 having input terminals to which the solenoid control circuits 15 and 16 are connected and an output terminal connected to the solenoids $6_S$ and $7_S$ of the normally-opened and normally-closed type solenoid valves 6 and 7, an averaging circuit 18 for averaging left and right drive-wheel velocities $V_{FL}$ and $V_{FR}$, a first change-over switch 19 for alternatively changing over an averaged drive-wheel velocity $V_{FA}$ averaged in the averaging circuit 18 and the left drive-wheel velocity $V_{FL}$ in accordance with the control mode to deliver it, and a second change-over switch 20 for alternatively changing over the averaged drive-wheel velocity $V_{FA}$ averaged in the averaging circuit 18 and the right drive-wheel velocity $V_{FL}$ in accordance with the control mode to deliver it. The control means 12 further includes a high select circuit 21 for selecting a higher one of left and right driven-wheel velocities $V_{RL}$ and $V_{RR}$ as a vehicle velocity $V_R$, a collectively-controlling target-velocity determining circuit 22 for determining a drive-wheel target-velocity for the collective control mode on the basis of the vehicle velocity $V_R$ provided in the high select circuit 21, an independently-controlling target-velocity determining circuit 23 for determining a drive-wheel target-velocity for the independent control mode on the basis of the vehicle velocity $V_R$, a third 24 and a fourth change-over switch 25 for alternatively changing over one of the target velocities determined in the target-velocity determining circuits 22 and 23 to the other to deliver it, a control mode judging circuit 26 for judging whether either the independent control mode or the collective control mode is to be selected, progressively incresing or decreasing circuits 27 and 28 for progressively increasing or decreasing the target velocities outputted from the third and fourth change-over switches 24 and 25 upon change-over between the independent control mode and the collective control mode, comparator circuits 29 and 30 for comparing the drive-wheel velocity outputted from the first change-over switch 19 with the target velocities from the progressively increasing or decreasing circuits 27 and 28 to deliver the result of such comparison into the left drive-wheel solenoid control circuit 15, and comparator circuits 31 and 32 for comparing the drive-wheel velocity outputted from the second change-over switch 20 with the target velocities from the progressively increasing or decreasing circuits 27 and 28 to deliver the result of such prison into the right drive-wheel solenoid control circuit 16.

Drive-wheel velocity detecting sensors $S_{FL}$ and $S_{FR}$ are mounted on the left and right front wheels as drive wheels, so that the drive-wheel velocities $V_{FL}$ and $V_{FR}$ are inputted to filters 33 and 34 in the control means 12, respectively. Driven-wheel velocity detecting sensors $S_{RL}$ and $S_{RR}$ are also mounted on the left and right rear wheels as driven wheels, so that the driven-wheel velocities $V_{RL}$ and $V_{RR}$ are inputted to filters 35 and 36 in the control means 12, respectively.

The filters 33 and 34 are connected to the averaging circuit 18 where an averaging calculation of the drive-wheel velocities $V_{FL}$ and $V_{FR}$ with noise removed in the filters 33 and 34, i.e., a calculation according to an expression $V_{FA} = (V_{FL} + V_{FR}) / 2$ is effected. As a result of this calculation, the averaged drive-wheel velocity $V_{FA}$ is outputted from the averaged circuit 18.

The first change-over switch 19 is adapted to change over the conducting connections of a separate contact 19a connected to the averaging circuit 18 and a separate contact 19b connected to the filter 33 with a common contact 19c in accordance with the output from the control mode judging circuit 26, so that if the output from the control mode judging circuit 26 is at a lower level, the separate contact 19a and the common contact 19c are interconnected into conduction, and if the output from the control mode judging circuit 26 goes into a higher level, the separate contact 19b and the common contact 19c are interconnected into conduction. The second change-over switch 20 is adapted to change over the conducting connections of a separate contact 20a connected to the averaging circuit 18 and a separate contact 20b connected to the filter 34 with a common contact 20c in accordance with the output from the control mode judging circuit 26, so that if the output from the control mode judging circuit 26 is at a lower level, the separate contact 20a and the common contact 20c are interconnected into conduction, and if the output from the control mode judging circuit 26 goes into a higher level, the separate contact 20b and the common contact 20c are interconnected into conduction.

The driven-wheel velocities $V_{RL}$ and $V_{RR}$ with noise removed in the filters 35 and 36 are inputted into the high select circuit 21. The high select circuit 21 is adapted to select the higher one of the driven-wheel velocities $V_{RL}$ and $V_{RR}$ to deliver it.

The collectively-controlling target-velocity determining circuit 22 is adapted to determine the target velocity for the drive wheels when the collective control mode has been selected, on the basis of the vehicle velocity $V_R$ inputted thereinto from the high select circuit 21, and comprises a higher target-velocity calculating circuit $22_H$ for calculating a higher target velocity $V_{RHC}$ on the basis of the vehicle velocity $V_R$, and a lower target-velocity calculating circuit $22_L$ for calculating a lower target velocity $V_{RLC}$ on the basis of the higher target velocity $V_{RHC}$. In the higher target-velocity calculating circuit $22_H$, the higher target velocity $V_{RHC}$ - (km/hr) is calculated, for example, according to the following expression (1):

$$V_{RHC} = (17/16) \times V_R + 10.5 \qquad (1)$$

In the lower target-velocity calculating circuit $22_L$, the lower target velocity $V_{RLC}$ (km/hr) is calculated, for example, according to the following expression (2):

$$V_{RLC} = V_{RHC} - 3 \qquad (2)$$

The independently-controlling target-velocity determining circuit 23 is adapted to determine the target velocity for the drive wheels when the independent control mode has been selected, on the basis of the vehicle velocity $V_R$ inputted thereinto from the high select circuit 21, and comprises a higher target-velocity calculating circuit $23_H$ for calculating a higher target velocity $V_{RHI}$ on the basis of the vehicle velocity $V_R$, and a lower target-velocity calculating circuit $23_L$ for calculating a lower target velocity $V_{RLI}$ on the basis of the higher target velocity $V_{RHI}$. In the higher target-velocity calculating circuit $23_H$, the higher target velocity $V_{RHI}$ - (km/hr) is calculated for example, according to the following expression (3):

$$V_{RHI} = (17/16) \times V_R + 15.5 \qquad (3)$$

In the lower target-velocity calculating circuit $23_L$, the lower target velocity $V_{RLI}$ (km/hr) is calculated, for example, according to the follouing expression (4):

$$V_{RLI} = V_{RHI} - 4 \qquad (4)$$

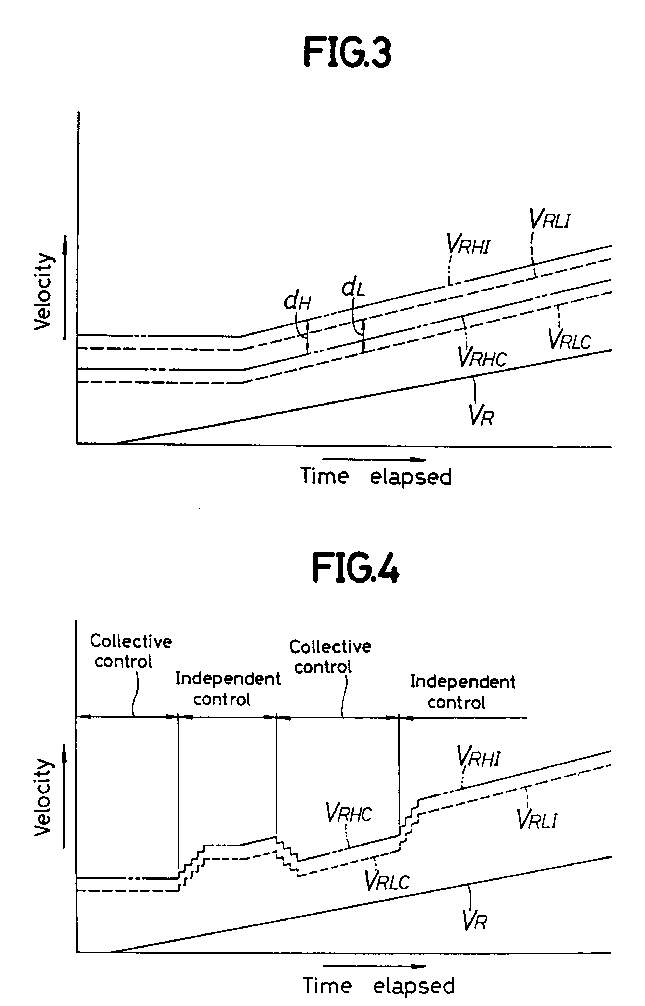

The target velocities determined in such collectively-controlling target-velocity determining circuit 22 and independently-controlling target-velocity determining circuit 23 are shown as in Fig.3. More specifically, the higher target velocity $V_{RHI}$ for use in the independent control mode is set larger by $d_H$ than the higher target velocity $V_{RHC}$ for use in the collective control mode, while the lower target velocity $V_{RLI}$ for use in the independent control mode is set larger by $d_L$ than the lower target velocity $V_{RLC}$ for use in the collective control mode. According to the above-described expressions (1) to (4), $d_H$ is 5 km/hr, and $d_L$ is 4 km/hr.

The third change-over suitch 24 is adapted to change over, in accordance uith the output from the control mode judging circuit 26, the conducting connections of a separate contact 24a connected to the higher target-velocity calculating circuit $22_H$ of the collectively-controlling target velocity determining circuit 22 as well as a separate contact 24b connected to the higher target-velocity calculating circuit $23_H$ of the independently-controlling target-velocity determining circuit 23 with a common contact 24c connected to the progressively increasing or decreasing circuit 27. If the output from the control mode judging circuit 26 is at a lower level, then the separate contact 24a and the common contact 24c are interconnected into conduction, and if the output from the control mode judging circuit 26 goes into a higher level, then the separate contact 24b and the common contact 24c are interconnected into conduction. The fourth change-over switch 25 is adapted to change over, in accordance with the output from the control mode judging circuit 26, the conducting connections of a separate contact 25a connected to the lower target-velocity calculating circuit $22_L$ of the collectively-controlling target-velocity determining circuit 22 as well as a separate contact 25b connected to the lower target-velocity calculating circuit $23_L$ of the independently-controlling target-velocity determining circuit 23 with a common contact 25c connected to the progressively increasing or decreasing circuit 28. If the output from the control mode judging circuit 26 is at a lower level, then the separate contact 25a and the common contact 25c are interconnected into conduction, and if the output from the control mode judging circuit 26 goes into a higher level, then the separate contact 25b and the common contact 25c are interconnected into conduction.

The drive wheel velocities $V_{FL}$ and $V_{FR}$ after noise has been removed and the vehicle velocity $V_R$ from the high select circuit 21 are inputted into the control mode judging circuit 26. Then, the control mode judging circuit 26, for example, on the basis of a deviation between the drive-wheel velocities $V_{FL}$ and $V_{FR}$ and the vehicle velocity $V_R$, judges whether driving force should be taken more account of, or vehicle stability should be taken more account of, so that if it is decided that the independent control mode should be selected, then a higher level signal is produced, and if it is decided that the collective control mode should be selected, then a lower level signal is produced.

Therefore, when the collective control mode is selected, the averaged drive-wheel velocity $V_{FA}$ is outputted from the common contact 19c of the first change-over switch 19; the averaged drive-wheel velocity $V_{FA}$ is outputted from the common contact 20c of the second change-over switch 20; the higher target velocity $V_{RHC}$ for the collective control mode is outputted from the common contact 24c of the third change-over switch 24; and the lower target velocity $V_{RLC}$ for the collective control mode is outputted from the common contact 25c of the fourth change-over switch 25. Meanwhile, when the independent control mode is selected, the left wheel-drive velocity $V_{FL}$ is outputted from the common contact 19c of the first change-over switch 19; the right drive-wheel velocity $V_{FR}$ is outputted from the common contact 20c of the second change-over switch 20; the higher target velocity $V_{RHI}$ for the independent control mode is outputted from the common contact 24c of the third change-over switch 24; and the lower target velocity $V_{RLI}$ for the independent control mode is outputted from the common contact 25c of the fourth change-over switch 25.

The progressively increasing or decreasing circuits 27 and 28 are adapted to progressively increase or decrease the target velocity received from the third and fourth change-over switches 24 and 25 upon change-over between the collective and independent control modes. Specifically, upon change-over from the collective control mode to the independent control mode, as shown in Fig.4, i.e., when the signal received into the progressively increasing or decreasing circuits 27 and 28 from the control mode judging circuit 26 has been brought from the lower level into the higher level, the progressively increasing or decreasing circuit 27 stepwise increases the higher target velocity from the value $V_{RHC}$ to the value $V_{RHI}$, and the progressively increasing or decreasing circuit 28 stepwise increases the lower target velocity from the value $V_{RLC}$ to the value $V_{RLI}$. Upon change-over from the independent control mode to the collective control mode, i.e., when the output signal from the control mode judging circuit 26 has been brought from the higher level to the lower level, the progressively increasing or decreasing circuit 27 stepwise decreases the higher target velocity from $V_{RHI}$ to $V_{RHC}$, and the progressively increasing or decreasing circuit 28 stepwise decreases the lower target velocity from $V_{RLI}$ to $V_{RLC}$.

The common contact 19c of the first change-over switch 19 is connected to a non-inverted input terminal of the comparator circuit 29, and the progressively increasing or decreasing circuit 27 is connected to an inverted input terminal of the comparator circuit 29 whose output terminal is connected to the left drive-wheel solenoid control circuit 15. Thus, the comparator circuit 29 supplies a higher level signal to the left drive-wheel solenoid control circuit 15, when the drive-wheel velocity received from the common contact 19c has exceeded the higher target velocity received from the progressively increasing or decreasing circuit 27.

The common contact 19c is connected to an inverted input terminal of the comparator circuit 30, and the progressively increasing or decreasing circuit 28 is connected to a non-inverted input terminal of the comparator circuit 30 whose output terminal is connected to the left drive-wheel solenoid control circuit 15. Thus, the comparator circuit 30 supplies a higher level signal to the left drive-wheel solenoid control circuit 15, when the drive-wheel velocity received from the common contact 19c is equal to or less than the lower target velocity received from the progressively increasing or decreasing circuit 28.

The comparator circuits 31 and 32 correspond to the comparator circuits 29 and 30, respectively. The comparator circuit 31 delivers a higher level signal to the right drive-wheel solenoid control circuit 16, when the drive-wheel velocity received from the common contact 20c has exceeded the higher target velocity received from the progressively increasing or decreasing circuit 27, and the comparator circuit 32 delivers a higher level signal to the right drive-wheel solenoid control circuit 16, when the drive-wheel velocity received from the common contact 20c is equal to or less than the lower target velocity received from the progressively increasing or decreasing circuit 28.

Each of the left and right drive-wheel solenoid control circuits 15 and 16 is adapted to deliver a signal indicative of a command to control the excitation and deexcitation of the individual solenoids $4_{FLS}$, $4_{FRS}$, $5_{FLS}$, $5_{FRS}$, $6_S$, $7_S$ on the basis of input signals from the corresponding comparator circuits 29, 30; 31, 32, respectively, so that the left and right drive-wheel velocities fall in a range between the higher target velocities $V_{RHC}$ and $V_{RHI}$ and the lower target velocities $V_{RLC}$ and $V_{RLI}$.

With such a construction of the control means 12, the control of the excitation and deexcitation of the individual solenoids $4_{FLS}$, $4_{FRS}$, $5_{FLS}$, $5_{FRS}$, $6_S$ and $7_S$ can be carried out in the independent control mode in which the hydraulic braking pressures for the left and right drive-wheel brake devices $B_{FL}$ and $B_{FR}$ are independently controlled, when the driving force should be more account of, and in the collective control mode in which the hydraulic braking pressures for the left and right drive-wheel brake devices $B_{FL}$ and $B_{FR}$ are collectively controlled, when the stability should be taken more account of. In particular, when in the independent control mode, the results of comparison of the left drive-wheel velocity $V_{FL}$ with the higher and lower target velocities $V_{RHI}$ and $V_{RLI}$ for the independent control mode are delivered from the comparator circuits 29 and 30 to the left drive-wheel solenoid control circuit 15, while the results of comparison of the right drive-wheel velocity $V_{FR}$ with the higher and lower target velocities $V_{RHI}$ and $V_{RLI}$ for the independent control mode are delivered from the comparator circuits 31 and 32 to the left drive-wheel solenoid control circuit 16. Thus, the left drive-wheel solenoid control circuit 15 judges a slipping tendency of the left drive wheel on the basis of the left drive-wheel velocity $V_{FL}$ and produces a control signal for the solenoids $4_{FLS}$, $5_{FLS}$, $6_S$ and $7_S$, while the right drive-wheel solenoid control circuit 16 judges a slipping tendency of the right drive wheel on the basis of the right drive-wheel velocity $V_{FR}$ and produces a control signal for the solenoids $4_{FRS}$, $5_{FRS}$, $6_S$ and $7_S$. When in the collective control mode, the results of comparison of the averaged drive-wheel velocity $V_{FA}$ provided in the averaging circuit 18 with the higher and lower target velocities $V_{RHC}$ and $V_{RLC}$ for the collective control mode are inputted into the left and right drive-wheel solenoid control circuits 15 and 16 which then judge the slipping tendency of the drive wheels on the basis of the same drive-wheel velocity $V_{FA}$ and produce control signals for the solenoids $4_{FLS}$, $4_{FRS}$, $5_{FLS}$, $5_{FRS}$, $6_S$ and $7_S$.

The operation of this embodiment will be described below. When the vehicle starts to travel on a sloping road or on a road with the left and right drive wheels in contact with road surface portions of different friction coefficients, the drive force should be taken more account of than the stability of the vehicle. In this case, the slipping tendency of the left and right drive wheels are judged independently, and the braking pressure for the drive wheel with an increased slipping tendency is independently increased. This ensures that if the slipping tendency of one of the drive wheels is increased, then the hydraulic braking pressure for one of the left and right drive-wheel brake devices $B_{FL}$ and $B_{FR}$ can be increased, while increasing of the braking force for the other drive wheel can be avoided, thereby ensuring a driving force by a differential limiting effect between the left and right drive wheels.

When the vehicle is travelling at a higher speed, the stability of the vehicle should be taken more account of than the driving force. In this case, the hydraulic braking pressures for the left and right drive-wheel brake devices $B_{FL}$ and $B_{FR}$ are collectively controlled. More specifically, the excessively slipping tendency of the drive wheels is judged on the basis of the averaged value $V_{FA}$ of the left and right drive-wheel velocities, and the hydraulic braking pressures for the drive-wheel brake devices $B_{FL}$ and $B_{FR}$ are controlled in accordance with the result of judgement. Thus, it is possible to prevent a variation in torque on the drive wheels from being produced irrespective of the left and right to provide a vibration of the vehicle attendant with a variation in yaw, thereby avoiding that the driver will experience discomfort.

If the change-over is conducted in this manner to select the independent control mode when the driving force should be taken more account of and to select the collective control mode when the stability should be taken more account of, the generation of excessive slipping of the drive wheels can be inhibited with a good sensitivity to ensure the driving force when in the independent control mode, and the hydraulic braking force control leading to the generation of a vibration of the vehicle can be avoided when in the collective control mode.

Because the target velocities $V_{RHI}$ and $V_{RLI}$ of the drive wheels in the independent control mode are set larger than the target velocities $V_{RHC}$ and $V_{RLC}$ of the drive wheels in the collective control mode, each of the velocities of the drive wheels which are being controlled during a tracton control in the independent control mode is controlled to a relatively large value. Thus, it is possible to reduce the difference between the ideal number of revolutions of the engine determined by the velocities of the drive wheels and the actual number of revolut ions of the engine, thereby minimizing the restraint applied from the drive wheels to the engine to avoid to the utmost that the number of revolutions of the engine will be unnecessarily decreased and that a control hunting will occur to reduce the drivability.

In addition, because the target velocities $V_{RHC}$, $V_{RLC}$; $V_{RHI}$, $V_{RLI}$ of the drive wheels are progressively increased or decreased upon change-over of the collective control mode and the independent control mode, the operation during the change-over can be conducted smoothly.

While the traction control by only the control of the braking forces has been described in the above embodiment, it will be understood that the present invention is also applicable to a traction control using both of a control of decreasing the engine output power and the above-described control of the braking forces. In this case, the traction control by the control of decreasing the engine output power is a supplementary collective control whereby the target values of the velocities of the drive wheels are set smaller than the target velocities $V_{RHC}$ and $V_{RLC}$ of the drive wheels provided in the collective control mode by the control of the braking forces. In doing so, it is possible to avoid any interference between the engine output power-decreasing control and the braking-force control, so that the traction deficiency due to the decreasing of the engine output power can be compensated for by the braking force control in the collective control mode. Moreover, if the target values in the independent control mode for the braking force control are set larger than $\{V_R + (\text{target value for the engine output power decreasing control} - V_R) \times 2\}$, the deficiency due to the engine output power decreasing control can be compensated for by the braking force control during the traction control in the independent control mode.

It should be noted that in judging whether either the collective control mode or the independent control mode is to be selected, the independent control mode may be selected, when the steering angle is equal to or less than a predetermined value, and the collective control mode may be selected, when the steering angle has exceeded the predetermined value. In addition, when the lateral acceleration of the vehicle is equal to or less than a predetermined value, the independent control mode may be selected, and when the lateral acceleration has exceeded the predetermined value, the collective control mode may be selected. Further, when the yaw rate of the vehicle is equal to or less than a predetermined value, the independent control mode may be selected, and when the yaw rate has exceeded the predetermined value, the collective control mode may be selected.

## Claims

1. A traction control method for a vehicle having a plurality of drive-wheel brake devices ($B_{FL}$, $B_{FR}$), comprising detecting when an excessive slipping tendency has occurred in drive wheels of the vehicle, selecting either an independent traction control mode or a collective traction control mode, and effecting the selected control mode to suppress said excessive slipping tendency, characterized by operating said plurality of drive-wheel brake devices ($B_{FL}$, $B_{FR}$) to independently control the braking forces of the plurality of drive-wheel brake devices ($B_{FL}$, $B_{FR}$)based on the slipping tendencies of the respective drive wheels when the independent control mode is selected, and to collectively control the braking forces of the drive-wheel brake devices ($B_{FL}$, $B_{FR}$) based on a single slipping tendency derived from the average velocity of the drive wheels when the collective control mode is selected.

2. A traction control method for a vehicle according to claim 1, wherein target values ($V_{RHI}$, $V_{RLI}$) of drive-wheel velocities ($V_{FL}$, $V_{FR}$) in the independent control mode are set larger than those ($V_{RHC}$, $V_{RLC}$) in the collective control mode.

3. A traction control method for a vehicle according to claim 1 or 2, wherein upper ($V_{RHI}$, $V_{RHC}$) and lower ($V_{RLI}$, $V_{RLC}$) target values of drive-wheel velocities ($V_{FL}$, $V_{FR}$) are set for each of the independent and collective control modes, and in the independent control mode each drive-wheel brake device is controlled on the basis of the relation between its associated drive-wheel velocity ($V_{FL}$, $V_{FR}$) and the independent mode target values ($V_{RHI}$, $V_{RLI}$) and in the collective mode all the drive-wheel brake devices are controlled on the basis of the relation between the average drive-wheel velocity ($V_{FA}$) and the collective mode target velocities ($V_{RHC}$, $V_{RLC}$).

4. A traction control method for a vehicle according to claim 1, 2 or 3, wherein the changeover from one mode to the other is automatically made on the basis of the deviation between the drive-wheel velocities ($V_{FL}$, $V_{FR}$) and the vehicle velocity ($V_R$).

5. A traction control method for a vehicle according to any preceding claim, wherein upper ($V_{RHI}$, $V_{RHC}$) and lower ($V_{RLI}$, $V_{RLC}$) target values of drive-wheel velocities ($V_{FL}$, $V_{FR}$) are set for each of the independent and collective control modes, and when the changeover from one mode to the other is made the upper target value ($V_{RHI}$, $V_{RHC}$) is progressively changed over time to its new value and the lower target value ($V_{RLI}$, $V_{RLC}$) is progressively changed over time to its new value.

6. A traction control method for a vehicle according to any preceding claim, further comprising the step of reducing an engine output power applied to the drive wheels when excessive slipping occurs in the drive wheels, wherein target velocities for reducing the engine output power are set to be lower than the target velocities ($V_{RHC}$, $V_{RHI}$) for the collective control mode.

7. A traction control method for a vehicle according to any preceding claim, further comprising the step of reducing an engine output power applied to the drive wheels when excessive slipping occurs in the drive wheels, wherein target velocities for reducing the engine output power are set such that:

$(V_R$ + (the target velocity for reducing engine output power - $V_R$)x2) < the target velocities for the independent control mode, wherein $V_R$ indicates a vehicle speed.

8. A traction control method for a vehicle according to any preceding claim, wherein the step of selecting the independent or collective control mode is carried out based on vehicle speed.

9. A traction control method for a vehicle according to any of claims 1-7, wherein the step of selecting the independent or collective control mode is carried out based on a steering angle.

10. A traction control method for a vehicle according to any of claims 1-7, wherein the step of selecting the independent or collective control mode is carried out based on a lateral acceleration of the vehicle.

11. A traction control method for a vehicle according to any of claims 1-7, wherein the step of selecting the independent or collective control mode is carried out based on a yaw rate of the vehicle.

12. A traction control method for a vehicle according to any preceding claim, including the steps of;

judging whether the vehicle is in a condition in which a driving force for the drive wheels should be taken into account or is in a condition in which vehicle stability should be taken into account; and

selecting said independent control mode when the driving force for the drive wheels should be taken into account, and selecting said collective control mode when the vehicle stability should be taken into account.

**Patentansprüche**

1. Traktionsregelverfahren für ein Fahrzeug mit einer Mehrzahl von Antriebsradbremsvorrichtungen ($B_{FL}$, $B_{FR}$), umfassend: Erfassen, wenn bei Antriebsrädern des Fahrzeugs eine übermäßige Schlupftendenz aufgetreten ist, Wählen entweder eines unabhängigen Traktionsregelmodus oder eines gemeinsamen Traktionsregelmodus und Bewirken des gewählten Regelmodus zur Unterdrückung der übermäßigen Schlupftendenz, **gekennzeichnet durch**: Betätigen der Mehrzahl von Antriebsradbremsvorrichtungen ($B_{FL}$, $B_{FR}$) zur unabhängigen Regelung der Bremskräfte der Mehrzahl der Antriebsradbremsvorrichtungen ($B_{FL}$, $B_{FR}$) auf Basis der Schlupftendenzen der jeweiligen Antriebsräder, wenn der unabhängige Regelmodus gewählt ist, und zur gemeinsamen Regelung der Bremskräfte der Antriebsradbremsvorrichtungen ($B_{FL}$, $B_{FR}$) auf Basis einer von der Durchschnittsgeschwindigkeit der Antriebsräder abgeleiteten einzigen Schlupftendenz, wenn der gemeinsame Regelmodus gewählt ist.

2. Traktionsregelverfahren für ein Fahrzeug nach Anspruch 1, wobei Sollwerte ($V_{RHI}$, $V_{RLI}$) von Antriebsradgeschwindigkeiten ($V_{FL}$, $V_{FR}$) in dem unabhängigen Regelmodus größer als diejenigen ($V_{RHC}$, $V_{RLC}$) in dem gemeinsamen Regelmodus gesetzt sind.

3. Traktionsregelverfahren für ein Fahrzeug nach Anspruch 1 oder 2, wobei für jeden der unabhängigen und gemeinsamen Regelmodi obere ($V_{RHI}$, $V_{RHC}$) und niedere ($V_{RLI}$, $V_{RLC}$) Sollwerte von Antriebsradgeschwindigkeiten ($V_{FL}$, $V_{FR}$) gesetzt sind, und in dem unabhängigen Regelmodus jede Antriebsradbremsvorrichtung auf Basis der Beziehung zwischen ihrer zugeordneten Antriebsradgeschwindigkeit ($V_{FL}$, $V_{FR}$) und den Sollwerten ($V_{RHI}$, $V_{RLI}$) des unabhängigen Modus gesteuert wird, und in dem gemeinsamen Modus alle Antriebsradbremsvorrichtungen auf Basis der Beziehung zwischen der durchschnittlichen Antriebsradgeschwindigkeit ($V_{FA}$) und den Sollgeschwindigkeiten ($V_{RHC}$, $V_{RLC}$) des gemeinsamen Modus gesteuert werden.

4. Traktionsregelverfahren für ein Fahrzeug nach Anspruch 1, 2 oder 3, wobei das Umschalten von einem Modus in den anderen automatisch auf Basis der Abweichung zwischen den Antriebsradgeschwindigkeiten ($V_{FL}$, $V_{FR}$) und der Fahrzeuggeschwindigkeit ($V_R$) durchgeführt wird.

5. Traktionsregelverfahren für ein Fahrzeug nach einem der vorhergehenden Ansprüche, wobei für jeden der unabhängigen und gemeinsamen Regelmodi obere ($V_{RHI}$, $V_{RHC}$) und niedere ($V_{RLI}$, $V_{RLC}$) Sollwerte von Antriebsradgeschwindigkeiten ($V_{FL}$, $V_{FR}$) gesetzt werden, und, wenn das Umschalten von einem Modus in den anderen durchgeführt wird, der obere Sollwert ($V_{RHI}$, $V_{RHC}$) über die Zeit progressiv in seinen neuen Wert geändert wird und der untere Sollwert ($V_{RLI}$, $V_{RLC}$) über die Zeit progressiv in seinen neuen Wert geändert wird.

6. Traktionsregelverfahren für ein Fahrzeug nach einem der vorhergehenden Ansprüche, das ferner den Schritt umfaßt, eine an die Antriebsräder angelegte Motorausgangsleistung zu mindern, wenn bei den Antriebsrädern ein übermäßiger Schlupf auftritt, wobei Sollgeschwindigkeiten zur Minderung der Motorausgangsleistung niedriger gesetzt sind als die Sollgeschwindigkeiten ($V_{RHC}$, $V_{RHI}$) für den gemeinsamen Regelmodus.

7. Traktionsregelverfahren für ein Fahrzeug nach einem der vorhergehender Ansprüche, das ferner den Schritt auf weist, eine an die Antriebsräder angelegte Motorausgangsleistung zu mindern, wenn bei den Antriebsrädern ein übermäßiger Schlupf auftritt, wobei Sollgeschwindigkeiten zur Minderung der Motorausgangsleistung derart gesetzt sind, daß:

($V_R$ + (die Sollgeschwindigkeit zur Minderung der Motorausgangsleistung - $V_R$) x 2) < die Sollgeschwin digkeiten für den unabhängigen Regelmodus, wobei $V_R$ eine Fahrzeuggeschwindigkeit bezeichnet.

8. Traktionsregelverfahren für ein Fahrzeug nach einem der vorhergehenden Ansprüche, wobei der Schritt der Wahl des unabhängigen oder gemeinsamen Regelmodus auf Basis der Fahrzeuggeschwindigkeit durchgeführt wird.

9. Traktionsregelverfahren für ein Fahrzeug nach einem der Ansprüche 1 bis 7, wobei der Schritt der Wahl des unabhängigen oder gemeinsamen Regelmodus auf Basis eines Lenkwinkels durchgeführt wird.

10. Traktionsregelverfahren für ein Fahrzeug nach einem der Ansprüche 1 bis 7, wobei der Schritt der Wahl des unabhängigen oder gemeinsamen Regelmodus auf Basis einer Querbeschleunigung des Fahrzeugs durchgeführt wird.

11. Traktionsregelverfahren für ein Fahrzeug nach einem der Ansprüche 1 bis 7, wobei der Schritt der Wahl des unabhängigen oder gemeinsamen Regelmodus auf Basis einer Gierrate des Fahrzeugs durchgeführt wird.

12. Traktionsregelverfahren für ein Fahrzeug nach einem der vorhergehenden Ansprüche, umfassend die Schritte:
Bewerten, ob sich das Fahrzeug in einem Zustand befindet, in dem eine Antriebskraft für die Antriebsräder berücksichtigt werden sollte, oder in einem Zustand befindet, in dem eine Fahrzeugstabilität berücksichtigt werden sollte; und
Wählen des unabhängigen Regelmodus, wenn die Antriebskraft für die Antriebsräder berücksichtigt werden sollte, und Wählen des gemeinsamen Regelmodus, wenn die Fahrzeugstabilität berücksichtigt werden sollte.

## Revendications

1. Mode de commande de traction de véhicule ayant une pluralité de dispositifs de freinage de roue de traction ($B_{FL}$,$B_{FR}$) comportant la détection de l'occurrence d'une tendance excessive de glissement des roues de traction du véhicule, sélectionnant un mode de contrôle indépendant de la traction ou un mode de contrôle collectif de la traction, et assurant la mise en oeuvre du mode de contrôle sélectionné de manière à éliminer ladite tendance excessive au glissement, caractérisé par la mise en oeuvre de ladite pluralité de dispositifs de freinage de roue de traction ($B_{FL}$,$B_{FR}$) pour le contrôle indépendant des forces de freinage de la pluralité des dispositifs de freinage des roues de traction ($B_{FL}$,$B_{FR}$) basé sur les tendances de glissement des roues respectives de traction lorsque le mode de contrôle indépendant est sélectionné, et pour assurer le contrôle collectif des forces de freinage des dispositifs de freinage des roues de traction ($B_{FL}$,$B_{FR}$) basé sur une seule tendance au glissement dérivée de la vélocité moyenne des roues de traction lorsque le mode de contrôle collectif a été sélectionné.

2. Méthode de contrôle de traction de véhicule selon la revendication 1, dont les valeurs cibles ($V_{RHI}$,$V_{RLI}$) de vélocités des roues de traction ($V_{FL}$,$V_{FR}$) en mode de contrôle indépendant sont réglées supérieures à celles ($V_{RHC}$,$V_{RLC}$) en mode de contrôle collectif.

**3.** Méthode de contrôle de traction de véhicule selon la revendication 1, dont les valeurs cibles supérieures ($V_{RHI}$,$V_{RHC}$) et inférieures ($V_{RLI}$,$V_{RLC}$) de vélocités ($V_{FL}$,$V_{FR}$) des roues de traction sont réglées pour chacun des modes de contrôle indépendant et collectif, et en mode de contrôle indépendant chaque dispositif de freinage de roue de traction est contrôlé sur la base du rapport entre sa vélocité associée de roue de traction ($V_{FL}$,$V_{FR}$) et les valeurs cibles de mode indépendant ($V_{RHI}$,$V_{RLI}$) et en mode collectif tous les dispositifs de freinage de roue de traction sont contrôlés sur la base du rapport entre la vélocité moyenne ($V_{FA}$) de roue de traction et les vélocités cibles de mode collectif ($V_{RHC}$,$V_{RLC}$).

**4.** Méthode de contrôle de traction de véhicule selon la revendication 1, 2 ou 3 dont la transition d'un mode à l'autre est effectuée de façon automatique sur la base de la divergence entre les vélocités de roue de traction ($V_{FL}$,$V_{FR}$) et la vélocité du véhicule ($V_R$).

**5.** Méthode de contrôle de traction de véhicule selon l'une quelconque des revendications précédentes, dont les valeurs cibles supérieures ($V_{RHI}$,$V_{RHC}$) et inférieures ($V_{RLI}$,$V_{RLC}$) de vélocités ($V_{FL}$,$V_{FR}$) des roues de traction sont réglées pour chacun des modes de contrôle indépendant et collectif, et lorsque la transition d'une mode à l'autre est effectuée la valeur de cible supérieure ($V_{RHI}$,$V_{RHC}$) est redressée progressivement dans le temps à sa nouvelle valeur.

**6.** Méthode de contrôle de traction de véhicule selon l'une quelconque des revendications précédentes, comportant en outre la phase de réduction de la puissance de sortie de moteur appliquée aux roues de traction lorsque le glissement excessif des roues de traction est relevé, dont les vélocités cibles de réduction de la puissance de sortie du moteur sont réglées inférieures aux vélocités cibles ($V_{RHC}$,$V_{RHI}$) du mode de contrôle collectif.

**7.** Méthode de contrôle de traction de véhicule selon l'une quelconque des revendications précédentes, comportant en outre la phase de réduction de la puissance de sortie de moteur appliquée aux roues de traction lorsqu'un glissement excessif des roues de traction est relevé, les vélocités cibles de réduction de la puissance de sortie moteur étant réglées de façon telle que:

($V_R$ + (vélocité cible de réduction de puissance de sortie moteur - $V_R$) x2) < les vélocités cibles de mode de contrôle indépendant,

dont $V_R$ indique une vitesse de véhicule.

**8.** Méthode de contrôle de traction de véhicule selon l'une quelconque des revendications précédentes, dont la phase de sélection du mode de contrôle indépendant ou collectif est effectuée sur la base de la vitesse du véhicule.

**9.** Méthode de contrôle de traction de véhicule selon l'une quelconque des revendications 1-7, dont la phase de sélection du mode de contrôle indépendant ou collectif est effectuée sur la base d'un angle de direction.

**10.** Méthode de contrôle de traction de véhicule selon l'une quelconque des revendications 1-7, dont la phase de sélection du mode de contrôle indépendant ou collectif est effectuée sur la base de l'accélération latérale du véhicule.

**11.** Méthode de contrôle de traction de véhicule selon l'une quelconque des revendications 1-7, dont la phase de sélection du mode de contrôle indépendant ou collectif est effectuée sur la base du régime de lacet du véhicule.

**12.** Méthode de contrôle de traction de véhicule selon l'une quelconque des revendications précédentes, comportant les phases suivantes:

évaluer si l'état du véhicule est tel qu'une puissance de commande des roues de traction doit être prise en compte, ou qu'il importe de prendre en compte la stabilité du véhicule; et

sélectionner ledit mode de contrôle indépendant lorsque la puissance de commande des roues de traction est à prendre en compte, et sélectionner ledit mode de contrôle collectif lorsque la stabilité du véhicule est à prendre en compte.

# FIG.1

EP 0 405 984 B1

# FIG.2

EP 0 405 984 B1

# FIG.3

# FIG.4